# EUROPEAN PATENT SPECIFICATION

(11) **EP 1 818 239 B1**
(45) Date of publication and mention of the grant of the patent: **28.10.2009**
(21) Application number: 07380034.4
(22) Date of filing: 13.02.2007
(51) Int. Cl.: B62B 7/14, A47D 13/02

(54) **A device for fitting seats and the like to the chassis of prams**
Vorrichtung zum Einpassen von Sitzen und Ähnlichem in die Chassis von Kinderwagen
Dispositif de fixation de sièges et similaires sur le châssis de poussettes.

(30) Priority: 14.02.2006 ES 200600317 U
(43) Date of publication of application: 15.08.2007
(73) Proprietor: JANE, S.A., 08184 Palau de Plegamans (Barcelona) (ES)
(72) Inventor: Jane Santamaria, Manuel, 08184 Palau de Plegamans (Barcelona) (ES)
(74) Representative: Pastells Teixido, Manuel

(56) References cited:
- DE-U1-202005 008 211
- FR-A1- 2 774 647
- US-A- 5 865 447
- US-A- 5 947 555
- US-A1- 2004 164 593

## Description

### OBJECT OF THE INVENTION

A device for fitting seats and the like to the chassis of prams.

### BACKGROUND OF THE INVENTION

There exist several devices for fitting seats, carrycots and the like to the chassis of prams in order to arrange in these latter the carrycot when the child is very small and to later on arrange the seat when the child has already grown to a bigger size, said devices being each adapted to be removably fitted to a respective holder being provided at each side of the chassis.

See documents DE-U-20 2005 008211, US-A-5 865 447, US-A-5 947 555, FR-A-2 774 647 and US-A-2004 164 593.

From among those of this kind of devices those are known which comprise an anchoring mechanism allowing to carry out a direct anchoring at the transverse pin being provided in a box being integral with each side of the chassis, the seat or the like being fitted thereby being thus arranged in one only sense, i.e. generally facing the rear side of the pram, this latter side being the one being pushed by the person moving the pram about.

### SUMMARY OF THE INVENTION

It is the object of this invention to improve this kind of devices in order to in a quick, practical and simple way have the seat or the like removably fitted in such an arrangement that it faces the rear side of the pram or the front side of this latter, i.e. the forward moving direction.

A characterising feature for such a purpose lies in the fact that the anchoring mechanism is housed in a body inferiorly having a projection having a slanted edge being fit to shift the transverse pin being slidably fitted in the box when the aforementioned body is fitted to said box.

An also characterising feature lies in the fact that a control is exteriorly fitted to the actual body housing the anchoring mechanism, said control being linked to said mechanism and when being actuated bringing about an unlocking action causing the release of the anchored state in order to thus be in a position to remove the seat or the like.

An additional feature lies in the fact that the transverse pin is linked to a spring being fit to take said transverse pin back to its initial position when the action of the aforementioned projection having a slanted edge has ceased.

These and other features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

Fig. 1 shows in a plan-view the detail of the box with the shiftable transverse pin;
Fig. 2 illustrates in a side elevation the detail of the device having been lockedly engaged for a positioning of the seat as per a sitting position facing the rear side of the pram;
Fig. 3 depicts in a perspective view the seat frame facing the forward moving direction before being fitted to the chassis of the pram;
Fig. 4 is a side elevational view of the device having been lockedly engaged as per the position of Fig. 3; and
Fig. 5 shows in a perspective view the detail of the fitting of a handrail to the seat.

### DETAILED DESCRIPTION

According to the drawings this device for fitting seats and the like to the chassis of prams comprises at each side of the seat frame (1), concretely at a central hub (2), a respective conventional anchoring mechanism being housed in a respective body (3) and (4) inferiorly having a projection (5) having a slanted edge (6).

A respective box (9) and (10) is fitted to each of the armrests (7) and (8) and has a respective transverse pin (11) and (12) fitted to it in a sliding arrangement in corresponding horizontal slots (13) and (14) being provided in said boxes.

Said transverse pins (11) and (12) are each linked to a respective spring (15) and (16) being at its free end securely attached to the pin (28) where the armrests (7) and (8) are linked in a pin-jointed connection to the corresponding branches (29) of the handlebar of the pram.

The anchoring mechanisms (not shown) are already known and comprise a catch being located at the vertical notch (E) being provided in the bodies (3) and (4), said catch being fit to engagedly seize the transverse pins (11) and (12), said notch being arranged in an offset arrangement and thus determining two portions of different width.

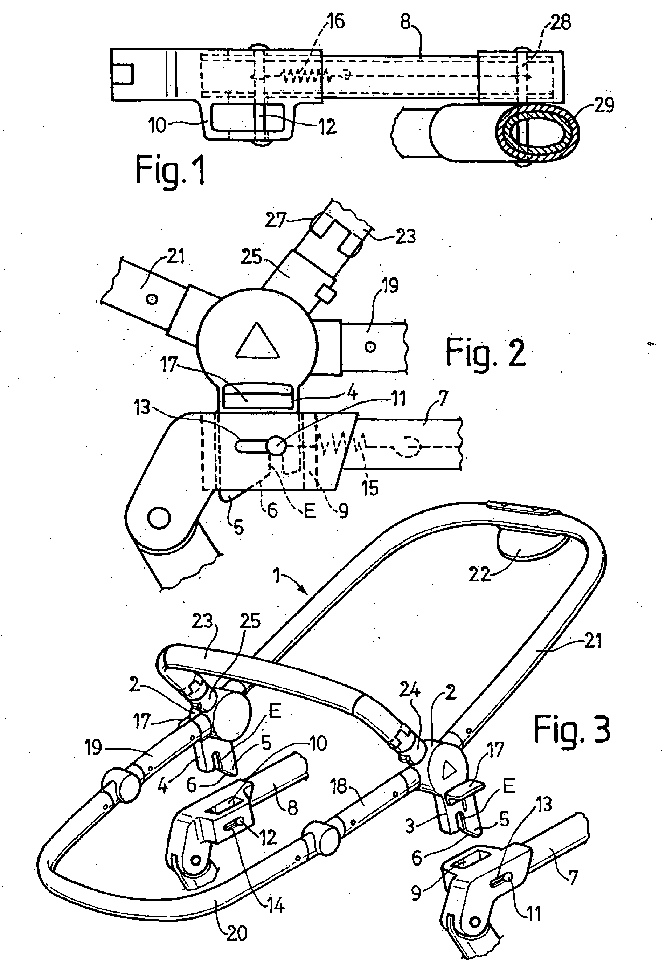

In this case the lower projection (5) corresponds to the wider portion, and when placing the seat in its normal position facing the rear side (Fig. 2) the anchoring mechanism in a direct manner engagedly seizes the pins (11) and (12).

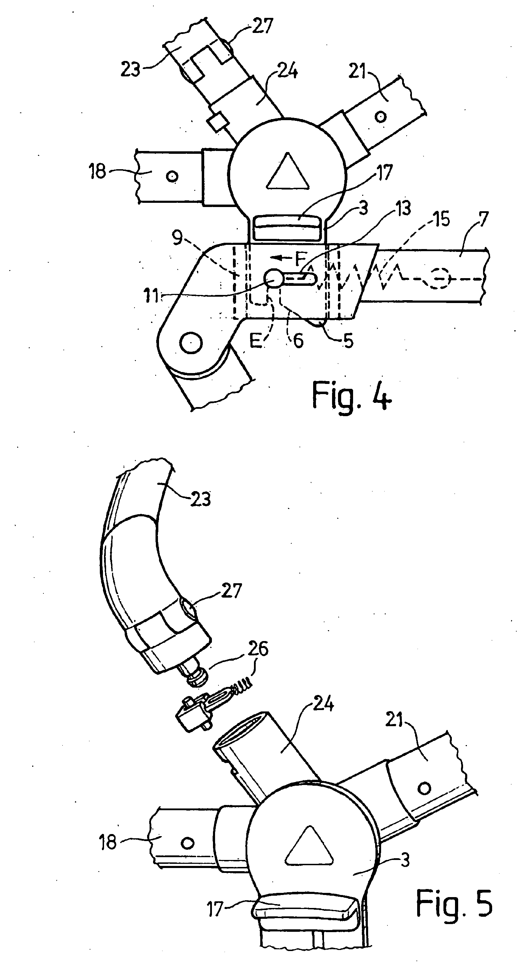

When wishing to fit the seat facing the forward moving direction (Figs. 3 and 4) the lower projection (5) abuttingly bumps against the aforementioned transverse pins (11) and (12), and thanks to the slanted edge (6) said pins are shifted as per arrow (F) till being put in register with the notches (E), the catch of the anchoring mechanism then carrying out its catching action in said position.

When releasing the seat the pins (11) and (12) are made to regain their initial position by virtue of the returning force of the springs (15) and (16).

The locked engagement of the anchoring mechanism is brought about in an automatic manner, and in order to be released said anchoring mechanism is linked to an outer control (17) which when being manually actuated in an upward direction releases it from the pins (11) and (12), said control being biased towards the active position of the anchoring mechanism by virtue of the biasing action of a spring being installed inside the bodies (3) and (4).

The seat frame comprises two lateral lengths (18) and (19) being fitted to the hubs (2) and having articulately fitted to their ends a U-shaped member (20) for forming a legrest, and a U-shaped member (21) for forming the backrest, this latter being fitted in an articulated arrangement and being thus in a position to assume different inclined positions that are to be stabilised with a control (22) by using means being already known.

A handrail (23) is linked to the hubs (2) and is fit to have each of its ends removably fitted to a respective tubular trunnion (24) and (25) being integral with said hubs, for said fitting means (26) having been provided which are fit to act as a by way of ball joint in order to allow the handrail (23) being fitted at one of its ends to effect a turning motion, each of the handrail ends besides comprising an articulated link (27).

## Claims

1. A device for fitting seats and the like to the chassis of prams, said device comprising at each side of the seat (1) a respective anchoring mechanism for a direct anchoring at corresponding attachments being provided at the chassis of the pram; **characterised in that** the anchoring mechanism is housed in a body (3 and 4) inferiorly having a projection (5) having a slanted edge (6) being fit to shift a transverse pin (11 and 12) being slidably fitted in a box (9 and 10) making up the attachment being provided at the chassis when the aforementioned body (3 and 4) is fitted to said box, a control (17) being exteriorly fitted to said body (3 and 4), said control (17) being linked to said anchoring mechanism and when being actuated bringing about an unlocking action causing the release of the anchored state.

2. A device for fitting seats and the like to the chassis of prams, as per claim 1, **characterised in that** the transverse pin (11 and 12) is linked to a spring (15 and 16) being fit to take said transverse pin back to its initial position when the action of the aforementioned projection (5) having a slanted edge (6) has ceased.

## Patentansprüche

1. Vorrichtung zum Befestigen von Sitzen und Ähnlichem auf Kinderwagengestellen, wobei diese Vorrichtung auf jeder Seite des Sitzes (1) einen Verankerungsmechanismus für die direkte Verankerung an entsprechenden am Kinderwagengestell vorgesehenen Aufnahmevorrichtungen aufweist, **dadurch gekennzeichnet, dass** der Verankerungsmechanismus in einem Körper (3 und 4) untergebracht ist, an dessen Unterseite ein Vorsprung (5) mit einer abgeschrägten Kante (6) ausgebildet ist, der geeignet ist, einen in einem Gehäuse (9 und 10), das die am Gestell vorgesehenen Aufnahmevorrichtungen bildet, gleitbar angeordneten Querstift (11 und 12) zu verschieben, wenn der vorgenannte Körper (3 und 4) an dem Gehäuse befestigt wird; ein Bedienungselement (17), das außen an dem Körper (3 und 4) angeordnet ist, wobei das Bedienungselement (17) mit dem Verankerungsmechanismus verbunden ist und eine Entriegelungsbewegung bewirkt, durch die der Verankerungszustand gelöst wird.

2. Vorrichtung zum Befestigen von Sitzen und Ähnlichem auf Kinderwagengestellen nach Anspruch 1, **dadurch gekennzeichnet, dass** der Querstift (11 und 12) mit einer Feder (15 und 16) verbunden ist, die geeignet ist, den Querstift in seine Ausgangsstellung zurückzuführen, sobald die Bewegung des vorgenannten mit einer abgeschrägten Kante (6) versehenen Vorsprungs (5) beendet ist.

## Revendications

1. Un dispositif pour le réglage de sièges et similaires au châssis de landaus, ce dispositif comprenant de chaque côté du siège (1) un mécanisme de fixation respectif pour une fixation directe aux systèmes de fixation correspondants situés sur le châssis du landau, **caractérisé en ce que** le mécanisme de fixation est logé dans un corps (3 et 4) qui a inférieurement une projection (5) ayant un bord incliné (6) qui est adapté pour déplacer une broche transversale (11 et 12) qui se loge par coulissement dans un boîtier (9 et 10) et réalise la fixation sur le châssis quand ledit corps (3 et 4) est logé dans ce boîtier, un contrôle (17) étant extérieurement adapté audit corps (3 et 4), ledit contrôle (17) étant relié audit mécanisme de fixation et quand il est activé réalisant une action de déverrouillage provoquant la libération de l'état de fixation.

2. Un dispositif pour le réglage de sièges et similaires au châssis de landaus, comme dans la revendication 1, **caractérisé en ce que** la broche transversale (11 et 12) est reliée à un ressort (15 et 16) qui est logé pour faire revenir ladite broche transversale à sa position initiale quand l'action de la projection mentionnée (5) ayant un bord incliné (6) a cessé.
